# EUROPEAN PATENT APPLICATION

(11) **EP 2 447 845 A1**
(43) Date of publication of application: **02.05.2012**
(21) Application number: 10188017.7
(22) Date of filing: 19.10.2010
(51) Int. Cl.: G06F 11/25

(54) **Method, system, and computer program for automated diagnostic with description logic reasoning**

(71) Applicant: SIEMENS AKTIENGESELLSCHAFT, 80333 München (DE)
(72) Inventor: Hoffmann, Werner, 91074, Herzogenaurach (DE); Hubauer, Thomas, 81475, München (DE); Klößinger, Ralf, 90409, Nürnberg (DE); Pirker, Michael, 81827, München (DE); Roshchin, Mikhail, 81829, München (DE)

(57) **Abstract**

The present invention is directed to a method, system, and computer software for automated system diagnostic with description logic reasoning, the method for system diagnosis detection, comprising employing a logic-based formal tentative diagnosis detection method, wherein the formal tentative diagnosis detection method is built by a plurality of ontologies that are interrelated via a plurality of logical statements, wherein the plurality of ontologies represent system observables and expert knowledge regarding the system, and the system diagnosis detection model is characterized in that the expert knowledge regarding the system is coordinated with the system observables to obtain a system diagnostic.

## Description

### FIELD OF THE INVENTION

The present invention is directed to a method, system, and computer software for automated diagnostic with description logic reasoning, and in particular, to a method, system, and computer program for automated system diagnostic using ontologies to represent different aspects of the system.

### BACKGROUND OF THE INVENTION

New advances in sensor technology and failure analysis are instigating a revolution in the May large electromechanical systems such as aircraft, helicopters, ships, power plants, and many industrial operations will be maintained and diagnosed in the future. For industry, there is a continued need for improved prognostics and diagnostic management of systems.

In the art, by fault diagnostics was understood the detection of an existing problem or failure in a system, in order to correct it. Today's advances are raising the bar toward machine prognostics, where failure modes and the remaining life of a system can be predicted, and quick and exact intervention may be performed to repair the identified faults. Novel solutions are responsive at least to the need for efficient operations and reduced maintenance costs.

In the art, machine related diagnostics was known as essentially taking data from sensors and probes that are placed on various system components to record specific parameters, and feeding the data into a computer program so that potential system faults and failures can be identified, tracked, and predicted. The aim of prognostics and diagnostic is to stop disabling or fatal failures before they happen. The data associated with various system parameters, potentially recorded as the failure occurs, must be thoroughly analyzed to understand the physios of each failure. Thus, the future diagnostic concepts go beyond what is currently known as diagnostics, in which the sensor data are simply monitored for the occurrence of anomalies or failures, and they are then corrected. The diagnostic process is analogous to the way physicians deal with medical problems. First the problem is detected, then a diagnosis is made about the failure mode and its severity. It is also important to predict the evolution of the failure in order to estimate the remaining useful life of the machine.

However, particularly for large-scale systems, diagnostic and prognosis are employed for predicting and preventing failures so that expensive equipment does not destroy itself or need to be discarded. Having more data on the faults found (diagnostics) and life expectancy (prognostics) can only help.

Therefore, a further need is to reduce the current reliance on diagnostic sensors, which already exist in many industrial systems, in favor of intelligent systems that correlate the data from these sensors and use it to make predictions and render diagnostic.

Among the varied potential applications of prognostics are the prediction of surface fatigue faults in rolling element bearings, cracking in turbine engine blades or in helicopter rotors, and shorts in induction motors. While the initial costs of engineering such prognosis systems might be substantial, costs are recovered through increased reliability and fewer unexpected failures. Such gains have been substantiated through the use of diagnostic and simple predictive maintenance practices in nuclear and fossil fuel power plants.

Improvements in prognosis and diagnostic through the development of better sensors and more effective algorithms will provide more lead time to respond to evolving failures. In addition, improved prognosis and diagnostic brings the benefits of increased safety and operational efficiency, reduction in lost operational hours, lower maintenance costs, decreased likelihood of secondary damage from failing system components, reduced inventory requirements, extended subcomponent life, and improved product quality. A more fully developed prognosis and diagnostic capability enables the better gauge when an impending system failure is acceptable, and when it isn't, especially in industrial systems where some failures may take lives and cost millions of dollars. In addition, better developed prognosis and diagnostic systems will help judge when redundancy is needed in a system, by determining which mission-critical systems need backup. Prognosis and diagnostic systems also help reliably decide when to switch to a redundant system, if one exists, by providing more accurate mechanises for detecting and predicting impending failures.

Another key prognostics component is the acquisition of data over time so that the sensed signals can be associated with the corresponding failure modes. Gathering this data often involves using seeded or inserted faults, such as cutting a notch in a gear tooth to simulate a crack, for example. In addition, a thorough understanding of transitional data, that is, the patterns of events that occur in various systems components from their initial state through failure, will enable computer tracking and prediction of the evolution of failure modes. Such understanding will lead to more robust diagnosis and prediction of machinery failures. The diagnostic will make use of intelligent computer algorithms. These algorithms can be trained to recognize and predict system anomalies and trends.

Therefore a need still exists for an intelligent automated prognosis and diagnostic method that may be applicable to a wide range of industrial systems.

### SUMMARY OF THE INVENTION

The present invention provides a solution to the above problem by providing the method for diagnosis detection in a system of claim 1, the system of claim 9 and computer program product of claim 11.

In accordance with another embodiment of the present invention it is envisioned a method for diagnosis detection in a system, comprising employing a logic-based formal tentative diagnosis detection method, wherein the formal tentative diagnosis detection method is built by providing a plurality of ontologies interrelated via a plurality of logical statements, wherein said plurality of ontologies represent system observables and expert knowledge regarding the system, and coordinating said expert knowledge regarding the system with said system observables to detect a system diagnostic.

In accordance with yet another embodiment of the present invention it is envisioned a system comprising a data bus system, a memory coupled to the data bus system, wherein the memory includes computer usable program code, a processing unit coupled to the data bus system, wherein the processing unit executes the computer usable program code to employ a logic-based formal model for diagnosis detection, wherein said formal model for diagnosis detection is built by providing a plurality of ontologies interrelated via a plurality of logical statements, wherein said plurality of ontologies represent system observables and expert knowledge regarding the system, and coordinate said expert knowledge regarding the system with said system observables to detect a system diagnostic.

In accordance with a further embodiment of the present invention it is envisioned computer program product comprising a tangible computer usable medium including computer usable program code for performing diagnosis detection in a system, the computer usable program code for providing a plurality of ontologies interrelated via a plurality of logical statements, wherein said plurality of ontologies represent system observables and expert knowledge regarding the system, and coordinating said expert knowledge regarding the system with said system observables to detect a system diagnostic. Compared to other solutions offered in the art, the solution provided by the present invention makes offers the possibility to the intervening technician to flexibly describe the domain of diagnosis and automatically (without programming) interpret the particular system situation. The logic based formal model diagnosis method provides a model-driven approach to the problem of diagnosing a system fault, instead of obtaining the same via essentially the much larger effort of programming. The logic based formal method of the present invention permits building scalable diagnosis models. The logic based formal method of the present invention permits closed loop control of the diagnosis and maintenance via an iterative process, to perform analysis by refining tentative results in closed fashion. The logic based formal method of the present invention is using a description logic reasoner, and as such it may receive explanations of the inference results and can be used as part of root-cause analysis functionality. The logic based formal method offers a technical systems representation at a generic high level. The method may be processed in an automated way and due to the fact that is a lean model is very well adapted to be processed in an automated way. Should the method be automated, the automated processing starts at the system element level. Since the logic based formal method is based on ontologies, it provides a high level of expressivity for the systems studied, since ontologies provide flexible representations especially for big technical systems. The method allows for both electrical, and mechanical views of the system.

Other characteristics and advantages of the present invention will be apparent in connection with the dependent claims.

In accordance with the present invention, the method of the invention is further characterised by a plurality of ontologies representing at least one of Features, Symptoms, System elements and Diagnosis of a system. The system observables are represented via ontologies Features and Symptoms, and the expert knowledge regarding the regarding the system is represented via ontologies System elements and Diagnosis. Coordinating the expert knowledge regarding the system with the system observables leads to a diagnostic via at least one of a manual and automated coordination. The system diagnostic is one of a certain diagnostic, a plausible diagnostic or a hypothetical diagnostic. The model for system diagnosis detection further comprises a description logic reasoner (DL) for calculating the model (200) without additional programming.

The method for diagnosis detection in a system of the present invention further comprises using a description reasoned for calculating the model without additional programming. The method may further comprise using a description logic reasoner (DL) for at least one of explaining inference results and to perform root-cause analysis functions.

In the system proposed by the present invention the processing unit further executes computer usable program code to coordinating the expert knowledge regarding the system with the system observables, leading to a diagnostic via at least one of a manual and automated coordination.

### DESCRIPTION OF THE DRAWINGS

For a more complete understanding of the present invention, the objects and advantages thereof, reference is now made to the following descriptions taken in conjunction with the accompanying drawings, in which:
- Fig. 1: illustrates a partial view of a logic based formal system diagnosis model of the present invention;
- Fig.: 2 illustrates the logic system diagnosis based formal model of the present invention;
- Fig. 3: is a flow chart representation of the method for diagnosis detection in a system, in accordance with an embodiment of the present invention.
- Fig. 4: is an embodiment of a data processing system in which a system diagnosis detection application may be implemented

Hen-limiting and non-exhaustive embodiments of the present invention are described with reference to the above referenced figures, wherein like reference numerals refer to like parts throughout the various views unless otherwise specified. The order of description should not be construed as to imply that these operations are necessarily order-dependent.

### DETAILED DESCRIPTION OF THE INVENTION

As will be appreciated by one skilled in the art, the present disclosure may be as a model, method, system or computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system."

The present disclosure is described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in ski computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

In the present invention, by "diagnosis" is understood the identification of the nature of anything, either by process of elimination or other analytical methods. Diagnosis is used in many different disciplines, with slightly different implementations on the application of logic and experience to determine the cause and effect relationships. Diagnostic and its tools are used by the respective professions in medicine, science, engineering, business. Diagnosis is also used in many other trades and professions to determine the causes of symptoms, mitigations for problems, or solutions to issues.

When a technical system encounters a failure, a technician attempting to remedy the situation receives information regarding a plurality of symptoms of the situation. Based on the plurality of symptoms received the technician must interpret the situation, in most cases without assistance, and attempt to remedy the situation.

Additional factors that complicate for the technician the rendering of a correct diagnostic regarding the encountered situation are that the definition of the diagnoses is subject to regular change, and that its own or the observations made available to him may be heterogeneous, incomplete, or uncertain. In its attempt to interpret the situation, for the technician the reason for the particular situations is usually unknown and he may only attempt to find out the reason via for example a root-cause analysis. Usually a full diagnostic requires a roadmap of the problematic transaction to address the issue and expedite problem resolution. Especially in environments employing distributed, interconnected applications, root cause analysis is difficult. These applications often execute on heterogeneous systems that reside in different locations and are owned by different groups. As a result, arriving at the diagnostics often takes a lot of time and generates supplementary costs. In addition, until the problem is resolved, the affected processes may slow down, display incorrect data, or even shut down completely, in each case adversely effecting end users.

For the attending technician the rules of situations are difficult to operate, to process and to analyze, and to correctly predict the behavior in terms of maintenance, he must take into account complete information.

Therefore, in order to solve the problem of making available an intelligent automated prognosis and diagnostic method that may be applicable to a wide range of industrial systems, the present invention proposes the employment, among others, of a logic-based formal system diagnostic detection model, which allows mathematically sound and complete inference regarding how to solve the system problem, and that permits the domain of diagnosis to be modeled using description logic principles.

As it will be described further in the present document, the logic based system diagnostic formal model proposed by the present invention permits deductive reasoning based on ontology, which allows to extract explicit information from implicit information, and is based on the open world assumptions that relevant inferences are performed based on the ontology, in order to classify the occurred situation as a set of tentative diagnoses, and this classification is performed automatically without the need for additional programming.

As it already know most ontologies describe individuals (instances), classes (concepts), attributes, and relations. In the logic based formal proposed by the present invention the plurality of ontologies employed are features, symptoms, diagnosis and system element, among others.

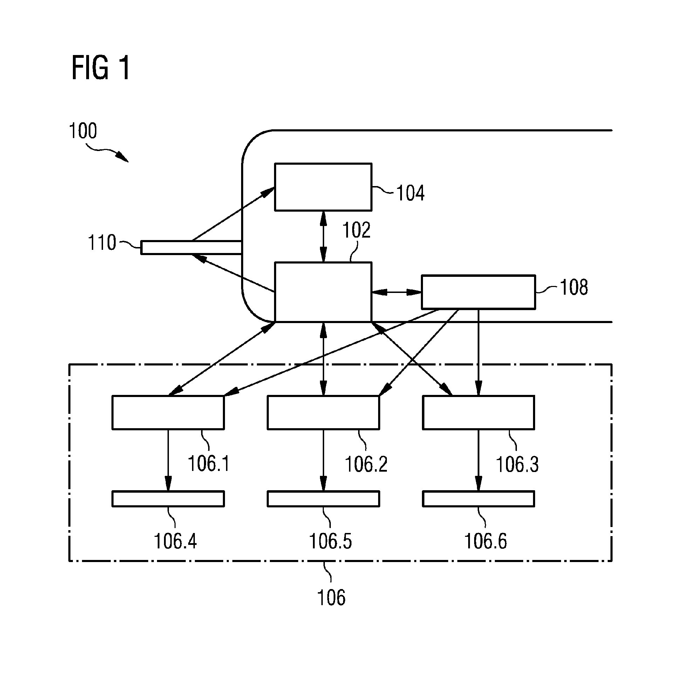

Referring now to Fig. 1, the figure illustrates a partial view on the logic based formal system diagnostic detection model of the present invention, that models the information that it is accessible to the technician in the real world.

The technician may observe a plurality of features 102, depicted in the model of the present invention via ontology "Feature" 102, that summarizes concrete observations from the real world. Specifically, a feature is characterized at least by the fact that it is a feature for a symptom, that has a particular name, and has a particular value in an interval. The plurality of features may be obtained via different types of observations 106, such as numerical features 106.1 that exemplarily may characterize the feature via concrete numerical values, such as if the symptom is elevated temperature, what is the value of the temperature, or with how much has the temperature elevated. Exemplarily in this case it may be "50 degrees centigrade" or that the temperature has doubled. Other feature available to characterize the plurality of features is a string feature 106.2, that is a sequence of symbols or digits 106.5, that are chosen from a set or alphabet. Exemplarily, in this case a display showing "PPP" is indicative of a symptom of malfunction. Other feature available to characterize the plurality of features is a Boolean feature 106.3 that may assume true or untrue values 106.6 in range of 0 to 1.

The plurality of observations 102 are directly or indirectly gathered into the model by formal ontology representation 102. Should the information be fed into the model indirectly, it may be provided via module 108 that may or may not pre-process the information and provide a shared vocabulary, which can be used to model the feature domain. The plurality of observations may be used to describe, depending on the case by case basis and on the nature of the system observed, values and behaviors of parameters such as acceleration, pressure, temperature, torque, proximity and vibration, etc. The descriptive information summarized under ontology features 102 is unstructured information.

The technician may also observe a plurality of symptoms 104 depicted in the model of the present invention via ontology "Symptom" 104, that summarizes the domain specific interpretation of a single feature, such as "what is the meaning of a temperature value of 50 degrees centigrade?". As indicated in the representation of FIG. 1 a feature is always corresponding to a symptom and vice versa as indicated by the logical statement 110.

The ontologies Features 102 and Symptoms 104 constitute the observables of the model, and as mentioned above are available mostly as unstructured information. Alternatively, tables or databases may be available to the technician with features observed about the system in previous occasions, presented in a more structured way, that give as well information regarding various sets of features occurring while certain system symptoms have been observed.

The logic based formal model is not limited by the treelike representation of FIG. 1, its presentation being available as well as a graph representation where links are created in an automated way.

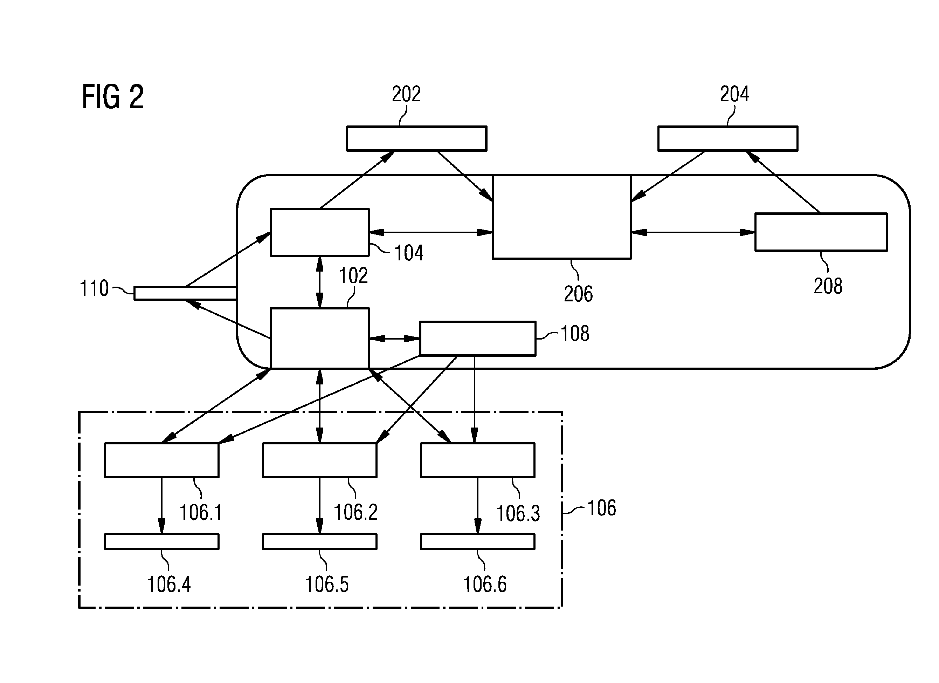

Referring now to Fig. 2, the figure illustrates the logic based formal model of the present invention.

In addition to the elements of the model discussed above in connection with Fig. 1, the view of the logic based formal model presented din Fig. 2 presents as part of the model, the ontology "System Element" 206. The concept of system element is the central concept for the symptom based diagnosis pattern and hierarchically models a compound object by means of a "part-of" relation. The ontology system element is inter-connected via logical statements with the ontology Symptoms 104 and ontology Diagnosis 208.

Ontology system element 206 is a description or all the elements of the system and their relationship. For example ,regarding a motor product line, its ontology representation described all its elements such as a motor version, control module, power supply unit, etc. and their relationships. Every element subscribing to ontology system element 206 inherits its properties from its upper element.

Ontology "Diagnostic" 208 represents the interpretation of "Symptoms" 104 of a "System Element" 206 and of its subcomponents.

The formal model 200 of Fig. 2 also comprises a plurality of logical statements, the relationships 110, 202 and 204, that are indicated for example by "is feature for some symptom" 110 should the logical statement/relationship be between ontology Feature 102 and ontology symptom 104. The logical statement/relationship 202 may for example be "is symptom for some element" 202 should the logical statement/relationship be between ontology symptom 104 and ontology system element 206. The logical statement/relationship 204 may be for example "is diagnosis for some element" if the logical statement/relationship is between ontology system element 206 and ontology diagnosis 208.

The above described logic based formal model 200 proposed by the present invention is employed such that via deductive reasoning based on ontology is obtained information, regarding a system diagnostic. The result of deduction may be a diagnostic that may classified as certain, plausible and hypothetical, diagnostic which explains fully or partially the observed situation. The task of classification of a diagnostic as certain, plausible and hypothetical is performed automatically via the logic-based ontology model 200 and a description logic reasoner (DL) in which the model 200 may be calculated, without the need of additional programming. The automatic classification is facilitated by formalizing via rules what are the results required, such as providing what is the relationship that needs to occur between two elements. The description logic reasoner is a software tool that provides automatically with logical operations, and as it will be showed later in the document, resides at leas in a memory element of an environment where the model is implemented.

In model 200 there is no direct link provided between symptoms and diagnostic. As a result errors are avoided and the model built is leaner and permits instantiation of different diagnosis.

Therefore to summarize, the model 200 employs a plurality of ontologies 102, 104, 26, and 208 that are interrelated via a plurality of logical statements 110, 202 and 204. The plurality of ontologies represent observables, such as features and symptoms of the system, and expert knowledge, such as system elements and diagnostic. The system diagnosis is obtained for via model 200 when the expert knowledge is coordinated with the observables to obtain a system diagnosis. A technician employing the model will have access to different types of information collected regarding the system and may via for example an available manual, coordinate, based on its expert knowledge regarding the system elements, the deduction of a diagnostic. The coordination between the observables and the diagnostic may not necessarily rely on any information presented in a formalized way as a manual or a data base, but may also rely entirely on the intervenieng expert knowledge of the technician.

As mentioned above, the result of the application of the model may be a diagnostic that may either be certain, plausible or hypothetical.

As a result, faulty behavior can be detected by registering one or more symptoms of the fault, where the observed situation is a set of the observed faulty behavior (n symptoms).

With the help of deductive reasoning and formal ontology model 200 of the present invention, may be obtained a Certain Diagnosis that is defined as a subclass of the concept Diagnosis, a Plausible Diagnosis, that is defined as is a subclass of the concept Diagnosis, and a Hypothetical Diagnosis that is defined as a subclass of the concept Diagnosis.

A diagnosis is certain if all of its defining symptoms are observed. The classification "Certain" can be interpreted as the cause of the problem. The reasoning can be performed automatically with both ABox and TBox inference.

As know from the art, by ABox and TBox inference is understood a description logic, where ABox inference employs meta-information or pre-established terminology and ABox inference employs concrete instantiations of the terminology.

The reasoning is performed automatically by logically connecting the pre-established terminology to each other is a consistent way, instantiating the terminology with concrete examples from system elements, identifying the observables of the systems such as features or symptoms, and describing the possible diagnosis, as certain, plausible and hypothetical.

Subclasses of the concept certain Diagnosis may be defined for each possible diagnosis definitions. These additional concepts must reference each relevant possible symptom with a conjunction function.

A diagnosis is Plausible if all the observed symptoms are part of the definition. A definition is established from the beginning and may pertain to the expert knowledge. The classification "Plausible" can be interpreted as the most possible direction of the situation development. The reasoning can be performed automatically with both ABox and TBox inference.

Subclasses of the concept Plausible Diagnosis may be defined for each possible diagnosis definitions. These additional concepts must reference minimum one of relevant possible symptoms with disjunction and exclude irrelevant symptoms with negation function. For instance Plausible Diagnosis 2 is a subclass of the concept Plausible Diagnosis

A diagnosis Hypothetical is if it is neither certain nor Plausible, but at least one of the defining symptoms was observed. The classification "Hypothetical" can be interpreted as uncertainty of the observed situation. The reasoning can be performed automatically with both ABox and TBox inference

Via the logic based formal model 200 of the present invention, the intervening technician obtains the possibility to flexibly describe the domain of diagnosis and automatically (without programming) interpret the particular system situation.

The logic based formal model for the system diagnosis detection 200 provides a model-driven approach to the problem of diagnosing a system fault, instead of obtaining the same via essentially a much larger effort of programming.

The logic based formal model for the system diagnosis detection 200 permits building scalable diagnosis models.

The logic based formal model for the system diagnosis detection 200 permits closed loop control of the diagnosis and maintenance, via an iterative process to performing analysis by refining tentative results in closed fashion.

The logic based formal model for the system diagnosis detection 200 is using a description logic reasoner, and as such it may receive explanations of the inference results and can be used as part of root-cause analysis functionality.

The logic based formal model for the system diagnosis detection 200 offers a technical systems representation at a generic high level. The model may be processed in an automated way and due to the fact that is a lean model is very well adapted to be processed in an automated way. Should the model be automated, the automated processing starts at the system element level.

The information represented via ontologies System element 206 and Diagnosis 208 is expert knowledge that may be available to the intervening technician or may come from a knowledge base that the model may tap into, and has been pre-loaded and made available to the model. Each engineering specialty may be contributing with available system element information that may be preloaded into and used by the model.

Since logic based formal model 200 is based on ontologies, it provides a high level of expressivity for the systems studied, since ontologies provide flexible representations especially for big technical systems. The model 200 allows both electrical, and mechanical views of the system.

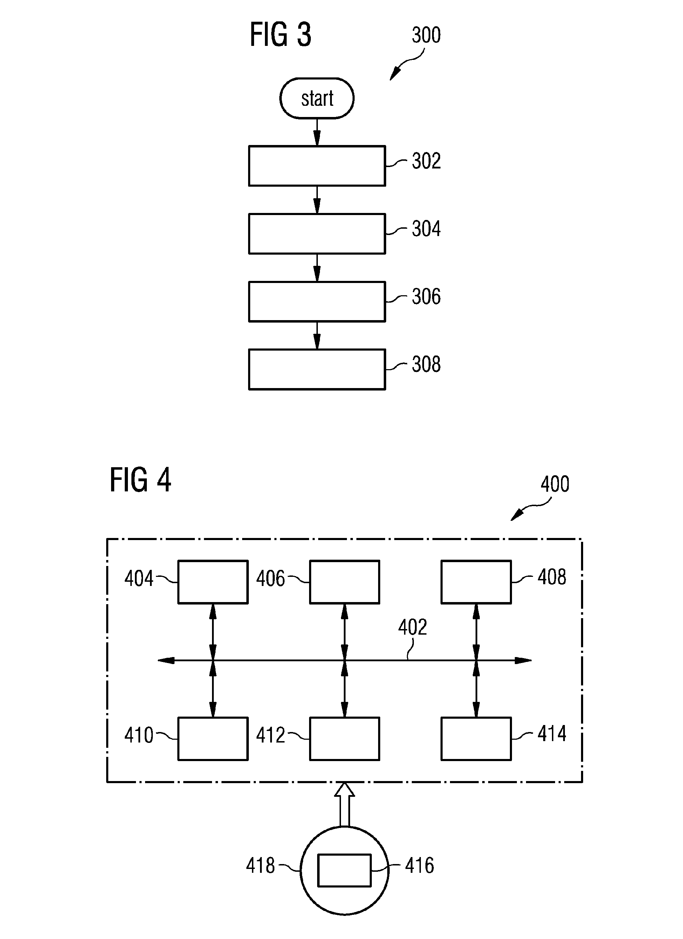

Referring now to Fig. 3, Fig. 3 is a flow chart representation of the method for diagnosis detection in a system, proposed in accordance with the present invention.

In accordance with an embodiment of the present invention, a method for diagnosis detection in a system 300, comprises at least the steps of employing a logic-based formal model for diagnosis detection 302 and coordinating expert knowledge regarding the system with system observables 306 to detect a system diagnostic. The logic-based formal model for diagnosis detection 200 is built by providing 304 a plurality of ontologies 102, 104, 206, 208 interrelated via a plurality of logical statements 110, 202, 204, the plurality of ontologies 102, 104, 206, 208 representing system observables and expert knowledge regarding the system.

The present invention may take the form of a system comprising at least a data bus (402) system, a memory (408) coupled to the data bus system, wherein the memory includes computer usable program code, a processing unit (404) coupled to the data bus system, wherein the processing unit executes the computer usable program code to employ a logic-based formal model for diagnosis detection, wherein the formal model for diagnosis detection is built by providing a plurality of ontologies 102, 104, 206, 208 interrelated via a plurality of logical statements 110, 202, 204, wherein the plurality of ontologies 102, 104, 206, 208 represent system observables and expert knowledge regarding the system, and coordinate the expert knowledge regarding the system with the system observables to detect a system diagnostic. The processing unit further executes computer usable program code to coordinate the expert knowledge regarding the system with the system observables, leading to a diagnostic via at least one of a manual and automated coordination.

Furthermore, the present disclosure may take the form of a computer program product embodied in any tangible medium of expression having computer-usable program code embodied in the medium.

Any combination of one or more computer usable or computer readable medium(s) may be utilized. The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

A computer program product in accordance with the present invention comprises a tangible computer usable medium including computer usable program code for diagnosis detection in a system, the computer usable program code for providing a plurality of ontologies (102, 104, 206, 208) interrelated via a plurality of logical statements (110, 202, 204), wherein said plurality of ontologies (102, 104, 206, 208) ontologies represent system observables and expert knowledge regarding the system, and coordinating said expert knowledge regarding the system with said system observable to detect a system diagnostic.

A computer program product that executes the method of diagnosis detection in a system of the present invention resides in an embedded hardware module in the studied devices. Alternatively, the computer program product may reside on a microcontroler, in a pre-compiled form to be used at the diagnostic /intervention site. Alternatively, the computer program product may reside on a central computer, that may host all expert knowledge or be a combination of embedded at the site, and a central server.

FIG. 4 is an embodiment of a data processing system in which an embodiment of a system diagnosis detection application may be implemented. The data processing system of FIG. 4 may be located and/or otherwise operate at any node of a computer network, that may exemplarily comprise clients 210 and/or 220, servers 240 and/or 250, etc.. In the embodiment illustrated in FIG. 4, data processing system 400 includes communications fabric 402, which provides communications between processor unit 404, memory 406, persistent storage 408, communications unit410, input/output (I/O) unit 412, and display 414.

Processor unit 404 serves to execute instructions for software that may be loaded into memory 406. Processor unit 404 may be a set of one or more processors or may be a multi-processor core, depending on the particular implementation. Further, processor unit 404 may be implemented using one or more heterogeneous processor systems in which a main processor is present with secondary processors on a single chip. As another illustrative example, processor unit 404 may be a symmetric multi-processor system containing multiple processors of the same type.

In some embodiments, memory 406 may be a random access memory or any other suitable volatile or non-volatile storage device. Persistent storage 408 may take various forms depending on the particular implementation. For example, persistent storage 408 may contain one or more components or devices. Persistent storage 408 may be a hard drive, a flash memory, a rewritable optical disk, a rewritable magnetic tape, or some combination of the above. The media used by persistent storage 408 also may be removable such as, but not limited to, a removable hard drive.

Communications unit 410 provides for communications with other data processing systems or devices. In these examples, communications unit 410 is a network interface card. Modems, cable modem and Ethernet cards are just a few of the currently available types of network interface adapters. Communications unit 410 may provide communications through the use of either or both physical and wireless communications links.

Input/output unit 412 enables input and output of data with other devices that may be connected to data processing system 400. In some embodiments, input/output unit 412 may provide a connection for user input through a keyboard and mouse. Further, input/output unit 412 may send output to a printer. Display 414 provides a mechanism to display information to a user.

Instructions for the operating system and applications or programs are located on persistent storage 408. These instructions may be loaded into memory4206 for execution by processor unit 404. The processes of the different embodiments may be performed by processor unit 404 using computer implemented instructions, which may be located in a memory, such as memory 406. These instructions are referred to as program code, computer usable program code, or computer readable program code that may be read and executed by a processor in processor unit 404. The program code in the different embodiments may be embodied on different physical or tangible computer readable media, such as memory 406 or persistent storage 408.

Program code 416 is located in a functional form on computer readable media 41B that is selectively removable and may be loaded onto or transferred to data processing system 400 for execution by processor unit 404. Program code 416 and computer readable media 41B form computer program product 420 in these examples. In one example, computer readable media 418 may be in a tangible form, such as, for example, an optical or magnetic disc that is inserted or placed into a drive or other device that is part of persistent storage 408 for transfer onto a storage device, such as a hard drive that is part of persistent storage 408. In a tangible form, computer readable media 418 also may take the form of a persistent storage, such as a hard drive, a thumb drive, or a flash memory that is connected to data processing system 400. The tangible form of computer readable media 418 is also referred to as computer recordable storage media. In some instances, computer readable media 418 may not be removable.

Alternatively, program code 416 may be transferred to data processing system 400 from computer readable media 418 through a communications link to communications unit 410 and/or through a connection to input/output unit 412. The communications link and/or the connection may be physical or wireless in the illustrative examples. The computer readable media also may take the form of non-tangible media, such as communications links or wireless transmissions containing the program code. The different components illustrated for data processing system 400 are not meant to provide architectural limitations to the manner in which different embodiments may be implemented. The different illustrative embodiments may be implemented in a data processing system including components in addition to or in place of those illustrated for data processing system 400. Other components shown in FIG. 4 can be varied from the illustrative examples shown. For example, a storage device in data processing system 400 is any hardware apparatus that may store data. Memory 406, persistent storage 408, and computer readable media 418 are examples of storage devices in a tangible form.

Accordingly, the disclosed embodiments present a model, method and computer program product for detecting system diagnostic. The terminology used herein is for the purpose of describing particular embodiments only and is not intended to be limiting of the disclosure. As used herein, the singular forms "a", "an" and "the" are intended to include the plural forms as well, unless the context, clearly indicates otherwise. It will be further understood that the terms and/or "comprising," when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various with various modifications as are suited to the particular use contemplated.

In addition, the flowchart and block diagrams in the Figures illustrate the architecture, functionality, and operation of possible implementation of systems, method and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A method (300) for diagnosis detection in a system, comprising:
employing a logic-based formal tentative diagnosis detection method,
wherein said formal tentative diagnosis detection method is built by
providing a plurality of ontologies (102, 104, 206, 208) interrelated via a plurality of logical statements (110, 202, 204),
wherein said plurality of ontologies (102, 104, 206, 208) represent system observables and expert knowledge regarding the system, and
coordinating said expert knowledge regarding the system with said system observables to detect a system diagnostic.

2. The method for system diagnosis detection (300) of claim 1, wherein said plurality of ontologies represent at least one of Features, Symptoms, System elements and Diagnosis.

3. The method for system diagnosis detection (300) of claim 1, wherein said system observable are represented via ontologies Features and Symptoms.

4. The method for system diagnosis detection (300) of claim 1, wherein said expert knowledge regarding the regarding the system is represented via ontologies System elements and Diagnosis.

5. The method for system diagnosis detection (300) of claim 1, wherein coordinating said expert knowledge regarding the system with said system observables leads to a diagnostic via at least one of a manual and automated coordination.

6. The method for system diagnosis detection (300) of claim 1, wherein said system diagnostic is one of a certain diagnostic, a plausible diagnostic or a hypothetical diagnostic.

7. The method for system diagnosis detection (300) of claim 1, further comprising calculating the diagnostic via a description logic reasoner (DL) without additional programming.

8. The method for system diagnosis detection (300) of claim If further comprising using a description logic reasoner (DL) for at least one of explaining inference results and to perform root-cause analysis functions.

9. A system comprising:
a data bus (402) system;
memory (408) coupled to the data bus system,
wherein the memory includes computer usable program code;
a processing unit (404) coupled to the data bus system,
wherein the processing unit executes the computer usable program code to:
employ a formal tentative diagnosis detection method that is built by
providing a plurality of ontologies (102, 104, 206, 208) interrelated via a plurality of logical statements (110, 202, 204),
wherein said plurality or ontologies (102, 104, 206, 208) represent system observables and expert knowledge regarding the system, and
coordinate said expert knowledge regarding the system with said system observables to detect a system diagnostic.

10. The system of claim 9, wherein the processing unit further executes computer usable program code to coordinating said expert knowledge regarding the system with said system observables leads to a diagnostic via at least one of a manual and automated coordination.

11. A computer program product comprising:
a tangible computer usable medium (400) including computer usable program code for performing diagnosis detection in a system, the computer usable program code for:
providing a plurality of ontologies (102, 104, 206, 208) interrelated via a plurality of logical statements (110, 202, 204),
wherein said plurality of ontologies (102, 104, 206, 208) represent system observables and expert knowledge regarding the system, and
coordinating said expert knowledge regarding the system with said system observables to detect a system diagnostic.
